Europäisches Patentamt

European Patent Office

Office européen des brevets

(11) Publication number: **0 169 741**
**A2**

# (12) EUROPEAN PATENT APPLICATION

(21) Application number: **85305314.8**

(22) Date of filing: **25.07.85**

(51) Int. Cl.⁴: **F 16 N 7/34**

(30) Priority: **26.07.84 GB 8419049**

(43) Date of publication of application:
**29.01.86 Bulletin 86/5**

(84) Designated Contracting States:
**AT BE CH DE FR GB IT LI LU NL SE**

(71) Applicant: **DESOUTTER, LIMITED**
**319, Edgware Road**
**Colindale London NW9 6ND(GB)**

(72) Inventor: **Barnard, Michael John**
**Kingswood Gorse Avenue**
**East Preston Sussex(GB)**

(72) Inventor: **Dudden, Christopher John**
**24 Ravine road**
**Boscome Bournemouth Dorset(GB)**

(74) Representative: **Higgins, Michael Roger et al,**
**Marks & Clerk 57/60 Lincoln's Inn Fields**
**London WC2A 3LS(GB)**

(54) **Liquid feed apparatus.**

(57) The apparatus is preferably in the form of a lubricator for a pneumatic tool or other device to be lubricated and comprises an air inlet (11), an air outlet (12), means for creating a pressure drop, such as an elastomeric gaiter (21) within an air flow passage (13) between the air inlet and the air outlet, a lubricant reservoir (27) exposed to air pressure in the passage (13) downstream of the gaiter (21), a piston and cylinder unit (31, 26) in which one side of the piston is exposed to air upstream of the gaiter and the other side of the piston is at the pressure of the reservoir (27), resilient means (57) urging the piston towards a first position, and a sight feeder (24) for receiving lubricant from the reservoir when the piston is moved from its first to a second position, as air begins to flow from the air inlet to the air outlet, and for supplying lubricant to the tool or other device to be lubricated. The apparatus could also be used to introduce any appropriate gas into any appropriate liquid.

./...

M&C FOLIO: 799P48604                    WANGDOC: 0284h

"LIQUID FEED APPARATUS"


This invention relates to liquid feed apparatus and more particularly but not exclusively relates to a lubricator for use in applications with steady or varying air flow demand, e.g. for lubrication of pneumatic tools.

It is known to provide a lubricator in which air flows through the lubricator past an automatic flow sensor. Some of this air flows through a check valve to pressurise an oil reservoir. Differential pressure between the reservoir and a sight feed dome causes oil to flow up a syphon tube from the reservoir into the sight feed dome from where the oil drips into a venturi section where it is atomised and then carried away to the pneumatic tool or other device to be lubricated. This is commonly known as an oil-fog lubricator. In a variation of this lubricator some of the air flowing through the lubricator passes down into the reservoir through a venturi and transverse jets. Again the differential pressure between the reservoir and sight feed dome causes oil to flow up a syphon tube to the sight feed dome from where the oil drips into the venturi and is broken up into fine particles by the action of transverse jets of air. The larger oil particles return to the oil in the reservoir while the smaller particles remain airborne and are carried away to the tool or other device to be lubricated by the air flowing through the lubricator. This variation is commonly known as a micro-fog lubricator. These known lubricators suffer from the drawback that there is a continuous supply of oil to the tool or other device resulting in undesirable pollution of the surrounding atmosphere. Moreover, when the tool or other device is used for a short duration only, insufficient oil may be supplied to the tool or other device to lubricate it properly.

One shot lubricators, which supply oil to the tool or other device to be lubricated each time the tool or device functions, are also known but they tend to be very expensive and require alterations to the supply for them to be fitted. Moreover, such one shot lubricators also suffer from the drawback that it is not possible to see the amount of oil being dispensed at each operation. Usually adjustment is by rotating a knob in line with a scale, and unless the person making the adjustment appreciates exactly the relationship between the scale and the volume of oil either over or under lubrication results.

It is an object of the invention to provide a lubricator in an improved form.

According to a first aspect of the invention there is provided a lubricator for a pneumatic tool or other device to be lubricated, comprising an air inlet, an air outlet, means for creating a pressure drop within an air flow passage between the air inlet and the air outlet, a lubricant reservoir exposed to air pressure in said air flow passage downstream of said pressure drop creating means, a piston and cylinder unit in which one side of the piston is exposed to air pressure upstream of said pressure drop creating means and the other side of the piston is at the pressure of the lubricant reservoir, the piston being movable between first and second positions, resilient means urging the piston towards its first position, and a feeder for receiving lubricant from the reservoir when the piston is moved from its first to its second position, as air begins to flow from the air inlet to the air outlet, in response to greater pressure on said one side of the piston than the other side of the piston, and for supplying lubricant to the tool or other device to be lubricated.

Preferred and/or optional features of the first aspect of the invention are set forth in Claims 2-14.

It is another object of the invention to provide apparatus for introducing a liquid into a gas in an improved form.

According to a second aspect of the invention there is provided an apparatus for introducing a liquid into a gas, comprising a gas inlet, a gas outlet, means for creating a pressure drop within a gas flow passage between the gas inlet and the gas outlet, a liquid reservoir exposed to gas pressure in said gas flow passage downstream of said pressure drop creating means, a piston and cylinder unit in which one side of the piston is exposed to gas pressure upstream of said pressure drop creating means and the other side of the piston is at the pressure of the liquid reservoir, the piston being movable between first and second positions, resilient means urging the piston towards its first position, and a feeder for receiving liquid from the reservoir when the piston is moved from its first to its second position, as gas begins to flow from the gas inlet to the gas outlet, in response to greater pressure on said one side of the piston than the other side of the piston.

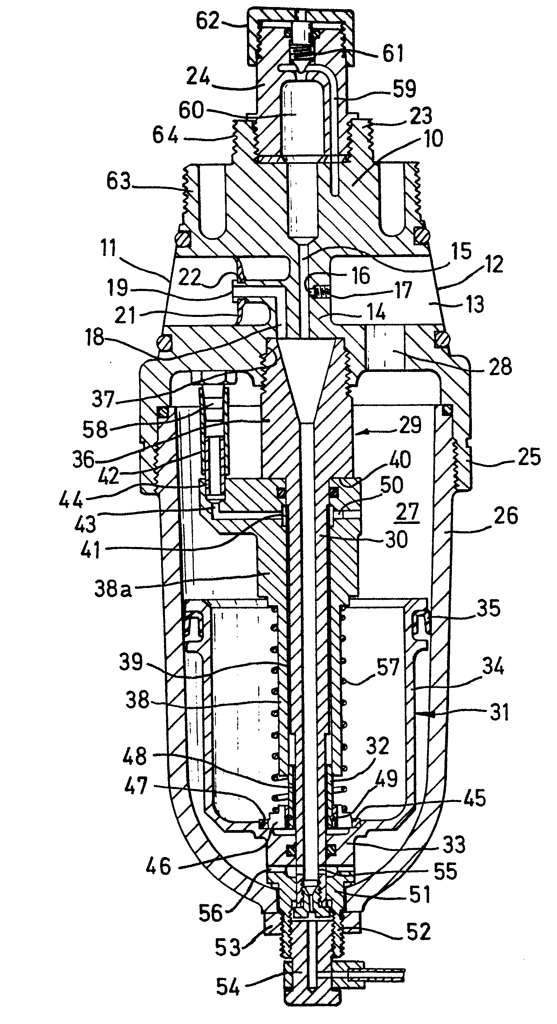

The invention will now be more particularly described by way of example with reference to the accompanying drawing which is a longitudinal section through one embodiment of a lubricator according to the first aspect of the invention.

Referring now to the drawings, the lubricator shown therein comprises a body 10 having therein an air inlet 11, an air outlet 12 and an air flow passage 13 between the air inlet 11 and the air outlet 12. A portion 14 of the body 10 extends within the air flow passage 13 and contains an oil transfer passage 15 with an opening 16 therein, closed by a removable plug 17, facing away from the inlet 11 and towards the outlet 12. The portion 14 also contains an air passage 18 which has an air inlet port 19 at one end, the port 19 facing towards the air inlet 11. An automatic flow sensor 21 in the form of an elastomeric gaiter is provided in the air flow passage 13 downstream of the air inlet port 19. The gaiter 21, which flexes as necessary to accommodate changes in air flow, surrounds the air passage 18 and its inner peripheral surface is located in an annular groove 22 in that part of the body portion 14 which defines the end of the air passage 18 adjacent to the air inlet port 19.

The upper end of the body 10 has an internally threaded boss 23 receiving an externally threaded portion of a sight feeder in the form of a sight feed dome 24 of transparent material and the lower end of the body 10 has an internally threaded skirt 25 for receiving an externally threaded portion of a bowl 26 which together with the body 10 and a primary piston 31 defines an oil or other lubricant reservoir 27.

A port 28 communicates the air flow passage 13, downstream of the gaiter 21, with the upper end of the reservoir 27 for a purpose which will be explained later.

A lubricant feed assembly 29 extends between the upper and lower ends of the reservoir 27 and comprises an air and oil supply tube 30, the primary piston 31 and a secondary piston 32 (which together with the primary piston acts as a pressure intensifier). The piston 31 is of cup-shape and has a base 33 slidably and sealingly mounted on the lower end of the supply tube 30 and a skirt 34 the upper free end of which supports a seal 35 engageable with the inner surface of the bowl 26. The bowl 26 therefore serves as a cylinder for the piston 31. The upper end of the supply tube 30 has an externally threaded head 36 which threadably engages with an internally threaded recess 37 in the lower end of the body 10. A sleeve 38 with an enlarged upper portion 38a surrounds the upper portion of the supply tube 30 with an annular clearance 39 therebetween. The upper end of the upper portion 38a of the sleeve 38 engages a shoulder 40 defined by the lower end of the head 36 of the supply tube 30. An annular groove 41 is provided in the upper portion 38a of the sleeve 38 and this communicates on the one hand with the upper end of annular clearance 39 and on the other hand with a tube 42 via a passage 43 in the upper portion 38a of the sleeve 38 and a nipple 44.

A disc member 45 having a central through bore and additional through holes 46 therein is fitted in a recess 47 in the base of the primary piston 31 and the secondary piston 32 is mounted on the lower end of the supply tube 30 with an annular clearance 48 therebetween. The upper end of the secondary piston extends into the lower end of the sleeve 38 which serves as a cylinder for the piston 32 although there may be a small clearance between the piston 32 and the sleeve 38 for a purpose which will become apparent hereinafter. The lower end of the piston 32 extends into or through the central bore of the disc member 45 and a circlip 49 mounted on the lower end of the piston 32 engages with a shoulder in the through bore of the disc member 45 to prevent upward movement of the secondary piston 32 relative to the primary piston 31 from the position shown but to allow downward movement of the secondary piston 32 relative to the primary piston 31 in a manner which will be described later.

The annular groove 41 also communicates with a radial passage 50 which may be fitted with a removable plug or a jet.

The upper end of the supply tube 30 communicates with the oil transfer passage 15 and with the air passage 18.

The assembly 29 also comprises a block 51 having a tubular portion 52 at its lower end which extends through the bottom of the bowl 26 and which is both externally and internally threaded for receiving respectively a lock nut 53, which secures the block 51 to the bowl 26 after the bowl has been threadably engaged with the skirt 25 of the body 10, and an oil outlet 54. The lower end of the supply tube 30 is located in the block 51 and radially extending openings 55 in the lower end of the supply tube 30 communicate with the underside of the piston 31 via passages 56 defined between the block 51 and the primary piston 31.

A compression spring 57 is provided to urge the primary piston 31 to its lowermost position in the bowl 26.

The tube 42 is connected at its upper end to a nipple 58 in the body 10. The nipple 58 is in communication with an inlet passage 59 in the sight feed dome 24 via a gallery (not shown) in the body 10, which gallery has a non-return valve (not shown) therein. An outlet chamber 60 in the sight feed dome 24 communicates with the oil transfer passage 15 in the body 10 and a needle control valve 61, which can be adjusted by a rotatable knob 62, is located between the inlet passage 59 and the outlet chamber 60 in the sight feed dome 20.

'O'-ring seals are provided as shown in appropriate places.

The lubricator will be mounted on an adaptor in an air line and the body 10 has an external thread 63 for that purpose. A filler cap (not shown) for the lubricant reservoir is engaged with an external thread 64 on the boss 23.

The operation of the lubricator will now be described.

When a pneumatic tool or other device fitted down stream of the lubricator is off, the pressure measured either side of the flow sensor 21 will be identical. This will mean that pressure acting on the bottom face of the primary piston 31 _via_ the port 19 and supply tube 30, and the pressure acting on the top face of the piston _via_ the oil will also be identical. Therefore, both pistons 31 and 32 will be held in their lower positions by the return spring 57.

At this point it will be assumed that the volumes above the pistons 31 and 32 are filled with oil, as the way this is achieved is described hereinafter.

When the tool or other device connected downstream of the lubricator is switched on, air will flow past flow sensor 21 causing a slight drop in pressure on the downstream side of the sensor. The pressure acting on the bottom of the primary piston 31 will not be affected, as this pressure is sensed _via_ port 19, which is upstream of sensor 21. The pressure acting on the top of the primary piston 31 via the oil will drop, as this pressure is sensed via port 28 which is downstream of the sensor 21. Therefore, piston 31 will move upwards. The piston 32 will bottom on the base of the piston 31 and will then move upwards with the piston 31. The oil above the piston 32 will be pressurised at a ratio of the diameters of pistons 31 and 32 multiplied by the pressure difference between the bottom and top of piston 31. Oil will flow via annular clearance 39, groove 41, passage 43 and tube 42 then via the internal galleries in the lubricator body 10 to the sight feed dome 24 and needle control valve 61. At this point, the oil will drip through the sight feed dome 24 down passage 15 to the lower end of supply tube 30 from where it will be carried by air flowing through tube 30 from port 19 to the outlet 54. It can then be passed back into the air supply from outlet port 13, via a small bore nylon tube, at a point as close as possible to the tool or other device to be lubricated. The rate of drip is controlled by adjusting knob 62 which in turn adjusts needle control valve 61.

As well as oil being passed to the needle valve 61, oil is returned to the reservoir 27 either via the small clearance between piston 32 and sleeve 38 and/or via a jet fitted in radial passage 50. The amount of oil being returned to the reservoir will be directly controlled by the setting of the needle control valve 61. After a delay, the maximum time of which is controlled by the size of said small clearance and/or said jet, the disc member 45 will contact the lower end of the sleeve 38 thus stopping any further oil delivery.

When the tool or other device is switched off, then as previously stated, the flow will become static, causing the pressure to balance both sides of sensor 21. The piston 31 will be returned by return spring 57. When the circlip 49 engages the shoulder in the through bore of the disc member 45 the secondary piston 32 will be drawn down with the primary piston 31 and oil will flow through the holes 46 in the disc member and through the annular clearance 48 to recharge the cylinder of the secondary piston 32.

If oil is not required to be passed _via_ an external small bore nylon tube connected to the outlet 54, then this outlet can be plugged and plug 17 removed and replaced by a suitable jet, which will deliver the oil directly into the air flow in the lubricator body 10. In that case, however, it may be necessary to plug the lower end of passage 15 and connect port 19 to the open part of passage 15. Alternatively, this latter jet could locate the small bore nylon tube, allowing it to be passed through the centre of an air hose or tube connected to the tool or other device, ending as close as possible to the same.

Existing oil fog or micro fog lubricators can be replaced by or indeed converted at low cost into a lubricator as above described, thus maintaining the advantages of oil fog and micro fog lubricators, in particular the provision of the sight dome, while providing one shot operation to minimise pollution.

The lubricator described above and shown in the drawing could instead be used to introduce any appropriate liquid into any appropriate gas.

0169741

13

<u>CLAIMS</u>:

1. A lubricator for a pneumatic tool or other device to be lubricated, comprising an air inlet (11), an air outlet (12), means (21) for creating a pressure drop within an air flow passage (13) between the air inlet and the air outlet, a lubricant reservoir (27) exposed to air pressure in said air flow passage downstream of said pressure drop creating means, a piston and cylinder unit (31,26) in which one side of the piston is exposed to air pressure upstream of said pressure drop creating means and the other side of the piston is at the pressure of the lubricant reservoir, the piston being movable between first and second positions, resilient means (57) urging the piston towards its first position, and a feeder (24) for receiving lubricant from the reservoir when the piston is moved from its first to its second position, as air begins to flow from the air inlet to the air outlet, in response to greater pressure on said one side of the piston than the other side of the piston, and for supplying lubricant to the tool or other device to be lubricated.

2. The lubricator of Claim 1, wherein the feeder (24) is a sight feeder.

3. The lubricator of Claim 1 or Claim 2, wherein the piston and cylinder unit (31,26) defines part of the lubricant reservoir.

4. The lubricator of anyone of Claims 1-3, wherein there is a lubricant transfer tube (30) between the feeder (24) and a lubricant outlet (54) which transfer tube extends through the reservoir.

5. The lubricator of Claim 4, wherein the lubricant transfer tube (30) also serves as an air supply tube between a position upstream of said pressure drop creating means and said one side of the piston.

6. The lubricator of Claim 4 or Claim 5 when dependent on Claim 3, wherein the transfer tube (30) extends through the piston and cylinder unit.

7. The lubricator of anyone of the preceding claims, wherein there is a lubricant outlet (16) in the air flow passage (13) downstream of the pressure drop creating means (21).

8. The lubricator of anyone of the preceding Claims, wherein the piston (31) forms part of or is associated with a pressure intensifier.

9. The lubricator of Claim 8, wherein the pressure intensifier comprises the first-mentioned piston (31) and a further piston (32) of smaller cross-sectional dimensions than the first-mentioned piston, the further piston being movable in a further cylinder (38).

10. The lubricator of Claim 9, wherein the further piston (32) has a through passage (48) therein, the further piston being movable by the first-mentioned piston (31) as the first-mentioned piston moves from its first to its second position and closes the through passage (48) in the further piston (32), and being separable from the first-mentioned piston (31) as the latter moves from its second to its first position so as to open the through passage (48) in the further piston (32) and allow lubricant from the reservoir to flow therethrough.

11. The lubricator of Claim 9 or Claim 10, wherein there is a non-return valve between the further piston (32) and the feeder (24).

12. The lubricator of anyone of the preceding Claims, further comprising means (61) for controlling the amount of lubricant to flow to the feeder (24) each time the first-mentioned piston (31) moves from its first to its second position.

13. The lubricator of Claim 12, wherein the flow control means comprises a control valve (61) and a lubricant return passage connected between a position upstream of the control valve and the reservoir.

14. The lubricator of Claim 13, wherein the return passage is arranged such that it is closed when the first-mentioned piston is in its second position.

15. Apparatus for introducing a liquid into a gas comprising a gas inlet (11), a gas outlet (12), means (21) for creating a pressure drop within a gas flow passage (13) between the gas inlet and the gas outlet, a liquid reservoir (27) exposed to gas pressure in said gas flow passage downstream of said pressure drop creating means, a piston and cylinder unit (31,26) in which one side of the piston is exposed to gas pressure upstream of said pressure drop creating means and the other side of the piston is at the pressure of the liquid reservoir, the piston being movable between first and second positions, resilient means (57) urging the piston towards its first position, and a feeder (24) for receiving liquid from the reservoir when the piston is moved from its first to its second position, as gas begins to flow from the gas inlet to the gas outlet, in response to greater pressure on said one side of the piston than the other side of the piston.

16. The apparatus of Claim 15, wherein the feeder (24) is a sight feeder.

17. The apparatus of Claim 15 or Claim 16, wherein the piston and cylinder unit (31,26) defines part of the liquid reservoir.

18. The apparatus of anyone of Claims 15-17, wherein the piston (31) forms part of or is associated with a pressure intensifier.

19. The apparatus of anyone of Claims 15-18, further comprising means (53) for controlling the amount of liquid to flow to the feeder each time the piston moves from its first to its second position.